# EUROPEAN PATENT APPLICATION

(11) **EP 4 335 277 A1**
(43) Date of publication of application: **13.03.2024**
(21) Application number: 23196874.4
(22) Date of filing: 12.09.2023
(51) Int. Cl.: A01D 31/00, A01G 23/02, A01D 25/04

(54) **METHOD AND DEVICE FOR FELLING TREES**

(30) Priority: 12.09.2022 BE 202205717
(71) Applicant: Carolus Trees BV, 3850 Nieuwerkerken (BE)
(72) Inventor: BROUX, Willem, 3850 Nieuwerkerken (BE)
(74) Representative: Brantsandpatents bv

(57) **Abstract**

The present invention relates to a method for grubbing up and sorting a plurality of trees planted successively in a soil, comprising the sequential steps of: supplying a mobile frame pulled by a tractor, comprising grubbing means at the front, with which the trees are loosened from the soil, and guide means, with which the trees are guided towards two clamping belts; clamping the grubbed up trees between the two clamping belts; feeding the trees upward by means of the two clamping belts, wherein the clamping belts end in a horizontally arranged conveyor belt, along which the grubbed up trees are transported, where the root system of the trees is supported on the conveyor belt, and where the trunk and/or crown of the trees leans against a sorting belt, positioned upright over at least part of the length of the conveyor belt at an angle between 90° and 150° with respect to the conveyor belt, the conveyor belt and the sorting belt moving at an equal transport speed; and sorting the trees into two or more classes based on the number of branches present on the trees.

## Description

### TECHNICAL FIELD

The invention relates to a method and a device for grubbing up a plurality of successively planted trees.

### PRIOR ART

Trees, such as nursery trees, are planted on the land as young grafts. As soon as the trees have lost their leaves, harvesting (grubbing up) of the trees can start. To grub up the trees, a grubbing module pulled by a tractor is traditionally used, driving next to the trees during grubbing-up. Known grubbing modules include an angled grubbing blade that, by propelling the device forward, scoops up the plants and their adhering material (roots). After the plants have been scooped up, the grubbed up plants remain on the land and must subsequently be picked up and sorted manually or the plants are transported to the grubbing module and sorted on the grubbing module. This requires an operator on the grubbing module to take the grubbed up trees and visually sort the trees, based on quality requirements such as, for example, number of branches, size, appearance of root system, etc.

However, this known way of working has a number of disadvantages. The speed and therefore the efficiency of grubbing up the plurality of trees depends on the speed with which the operator on the grubbing module can take a grubbed up tree and inspect it and then sort the tree correctly. If the speed of grubbing up is increased, there is a chance that the operator will not have enough time to sort correctly and that the trees will not meet the quality requirements. Furthermore, it is difficult for an operator to see up close (when he has it in his hands) whether a tree meets all quality requirements, which makes inspecting a tree take a long time.

Using a second operator on the grubbing module, so that taking and sorting the trees can be spread over two operators, does not solve these problems. It is still difficult for the second operator to see up close (when he has it in his hands) whether a tree meets all quality requirements, which also makes the grubbing speed slow.

Grubbing devices are known, such as EP2218318 and NL1041543, which are aimed at grubbing up plants more easily without damaging roots but are not aimed at grubbing up trees and cannot be applied to that.

Moreover, known grubbing devices often do not allow an ergonomic way of working for the operator(s).

The present invention aims to find a solution for at least some of the above problems.

### SUMMARY OF THE INVENTION

The invention relates to a method for grubbing up and sorting a plurality of successively planted trees according to claim 1.

The method allows trees to be grubbed up more quickly, without sacrificing quality. The trees can be inspected better and faster for the various quality requirements, such as the number of branches on the tree, the length of the tree, the length of the branches, the appearance of the root system, etc. The sorting belt and conveyor belt positioned at an angle make it possible for the trees to be transported forward at a slightly tilted position so that on the one hand the crown of the tree (i.e., the branches) is further away from the operator, so that they can count the branches more easily and quickly, and so that, on the other hand, the root system of the tree is closer to the operator, so that they can check the root system more closely for, for example, root galls (infection with *Agrobacterium tumefaciens*) or damage. Moreover, the angle ensures that trees are less likely to be blown or not blown off the conveyor belt if there is wind. The position of the sorting belt and the conveyor belt relative to each other also ensures that the operator(s) responsible for sorting the trees can work more ergonomically.

Preferred forms of the invention are shown in claims 2-16.

A specific preferred form of the invention is given in claim 4.

The sorting belt is provided with cleats between which the trees are positioned, and where the cleats are positioned perpendicular to the sorting belt. A sorting belt equipped with cleats is advantageous because it prevents the trees from falling askew while moving on the conveyor belt and along the sorting belt. The trees are, as it were, pushed along by the cleats while the conveyor belt moves. In addition, the cleats also ensure that trees fall less quickly or do not fall askew when the wind blows by providing extra support. The cleats also allow physical separation between different trees, when two or more trees are present on the conveyor belt at the same time. Without cleats it would be difficult to place multiple trees on the conveyor belt, as the trees would easily lean against each other and become entangled with the branches.

Another specific preferred form of the invention is given in claim 8.

The conveyor belt is provided with a raised edge over its entire length on one side, opposite to the side where the sorting belt is located. The raised edge is advantageous because it prevents a tree from sliding off the conveyor belt, which is possible due to the tilted position on the conveyor belt.

In a second aspect, the invention concerns a device for grubbing up and sorting a plurality of successively planted trees according to claim 17.

### DETAILED DESCRIPTION

The invention concerns a method for grubbing up and sorting a plurality of successively planted trees.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "provided with," are synonyms and are inclusive or open-ended terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In a first aspect, the invention concerns a method for grubbing up and sorting a plurality of trees planted successively in a soil.

In a preferred embodiment, the method comprises the sequential steps of:
- supplying a mobile frame pulled by a tractor, comprising grubbing means at the front, with which the trees are loosened from the soil, and guide means, with which the trees are guided towards two clamping belts;
- clamping the grubbed up trees between the two clamping belts;
- feeding the trees upward by means of the two clamping belts along the side of the tractor, wherein the clamping belts end in a horizontally arranged conveyor belt on the mobile frame, along which the grubbed up trees are transported, where the root system of the trees is supported on the conveyor belt, and where the trunk and/or crown of the trees leans against a sorting belt, positioned upright over at least part of the length of the conveyor belt at an angle between 90° and 150° with respect to the conveyor belt, the conveyor belt and the sorting belt moving at an equal transport speed; and
- sorting the trees into two or more classes based on the number of branches present on the trees.

The method allows trees to be grubbed up more quickly, without sacrificing quality. The trees can be inspected better and faster for the various quality requirements, such as the number of branches on the tree, the length of the tree, the length of the branches, the appearance of the root system, etc. The sorting belt and conveyor belt positioned at an angle make it possible for the trees to be transported forward at a slightly tilted position so that on the one hand the crown of the tree (i.e., the branches) is further away from the operator, so that they can count the branches more easily and quickly, and so that, on the other hand, the root system of the tree is closer to the operator, so that they can check the root system more closely for, for example, root galls (infection with *Agrobacterium tumefaciens*) or damage. Moreover, the angle ensures that trees are less likely to be blown or not blown off the conveyor belt if there is wind.

The guide means are preferably positioned above the grubbing means, and in an embodiment are provided with two arms, which are slightly tilted relative to each other, so that a V-shape is approximated. The guide means guide the trees between the two arms towards the clamping belts while the tractor is driving forward. The trees thus enter the arms at the widest distance between the two arms. The trees are simultaneously grubbed up by the grubbing means, so that the trees are loosened from the soil.

In a preferred form the angle is at least 90°, preferably at least 95°, more preferably at least 100°, even more preferably at least 105°, most preferably at least 110°. This angle is minimally necessary to ensure that the crown (and thus the branches) of the trees are sufficiently tilted away so that they are sufficiently visible to allow efficient sorting based on quantity of branches. Also, from this minimum angle the root system of the trees is sufficiently close and free to inspect for diseases, such as infection with *Agrobacterium tumefaciens.* In another preferred form the angle is a maximum of 150°, preferably a maximum of 145°, more preferably a maximum of 140°, even more preferably a maximum of 135°, most preferably a maximum of 130°. This angle is maximal because otherwise the tree would be tilted so flat that the branches could no longer be clearly seen. Moreover, if the angle is too large, there is a chance that the sorting belt will damage the trees in an adjacent planted row of trees, because it protrudes too far from the mobile frame. In another preferred form the angle is between 90° and 150°, preferably between 95° and 145°, more preferably between 100° and 140°, even more preferably between 105° and 135°, even more preferably between 110° and 130°, even more preferably between 115° and 125°, most preferably about 120°.

In a preferred form, the angle is variably adjustable, so that it can easily be adapted to the type of tree to be grubbed up, or even to the variety to be grubbed up. A heavier tree will be transported at a smaller angle than a lighter tree. This is because heavier trees are more difficult to blow down by the wind, and because these trees are heavier to lift for any operators on the mobile frame.

In a further preferred form, the angle is variably adjustable between 90° and 150°, preferably between 95° and 145°, more preferably between 100° and 140°, even more preferably between 105° and 135°, even more preferably between 110° and 130°, even more preferably between 115° and 125°. So that the method can be applied to different tree species and varieties.

In an embodiment, the root system is shaken during the upward movement of the trees to remove excess soil. Shaking is preferably done by means of a shaking device in line with the grubbing means (downstream).

In a preferred embodiment, the sorting belt is provided with cleats between which the trees are positioned, and where the cleats are positioned perpendicular to the sorting belt.

A sorting belt equipped with cleats is advantageous because it prevents the trees from falling askew while moving on the conveyor belt and along the sorting belt. The trees are, as it were, pushed along by the cleats while the conveyor belt moves. In addition, the cleats also ensure that trees fall less quickly or do not fall askew when the wind blows by providing extra support. The cleats also allow physical separation between different trees, when two or more trees are present on the conveyor belt at the same time. Without cleats it would be difficult to place multiple trees on the conveyor belt, as the trees would easily lean against each other and become entangled with the branches.

In a further preferred form, the cleats are positioned in an arranged manner on the sorting belt, with a cleat positioned alternately at the top and bottom of the sorting belt. Thus, a tree supported on the conveyor belt and leaning against the sorting belt will always have a support point along both sides, but the trees are not obstructed by the distance between these cleats. The cleats at different heights also allow for providing a support point for both larger and smaller trees, located approximately in the middle of the tree.

The sorting belt is preferably provided with between 12 and 15 cleats, more preferably between 13 or 14 cleats. The cleats are preferably distributed at a regular distance over the sorting belt.

In an embodiment the cleats have an L-shaped profile. The cleats are connected to the sorting belt with the short part of the L-shaped profile, whereby the end of the short part of the L-shaped profile is positioned at the level of the center of the sorting belt. Such that the corner of the L-shaped profile is on the outside of the sorting belt. The longer part of the L-shaped profile extends perpendicularly above the sorting belt and forms the support point for the trees.

In a further preferred form, the distance between two successive cleats is between 30 and 60 cm, preferably between 35 and 55 cm. This distance is measured at the center line of the sorting belt, which runs along the length of the sorting belt in the middle.

In an embodiment, the sorting belt has a width of at least 10 cm, preferably at least 15 cm, more preferably at least 20 cm. This width is the minimum required to ensure that the trees can be sufficiently supported. Moreover, this minimum width is necessary to be able to securely attach the cleats to the sorting belt. In another preferred form, the width is a maximum of 50 cm, preferably a maximum of 45 cm, most preferably a maximum of 40 cm. This width is maximal because a wider sorting belt can hinder placing the trees against the sorting belt, causing the branches to be bent or damaged when they lean against the sorting belt. A wider sorting belt will make many contact points with the crown. This then increases the chance of damage. In another preferred form the height is between 10 and 50 cm, preferably between 15 and 45 cm, more preferably between 20 and 40 cm.

In a preferred form, the conveyor belt is provided with a raised edge over the entire length on one side. The edge is preferably provided on the side opposite and parallel to the side where the sorting belt is located. In this way, the crown of the tree is tilted away from the side where the raised edge is located. The raised edge is advantageous because it prevents a tree from sliding off the conveyor belt, which is possible due to the tilted position on the conveyor belt. The root system will be stopped by the edge in case of any sliding.

In an embodiment, the edge is provided with a wavy relief, positioned in such a way that the wave length lies in the direction of the length of the conveyor belt and the amplitude is positioned horizontally perpendicular to it. The relief is preferably provided in the edge, strongly wavy with a wave length between 1 and 10 cm, more preferably between 2 and 8 cm, even more preferably between 3 and 7 cm. The wavy relief ensures that if the root system slides against the edge, the roots are not compressed and therefore damaged. The protruding roots can penetrate into the relief, into the waves, without sustaining damage.

In a preferred form, the raised edge has a height of at least 1 cm, preferably at least 1.5 cm, more preferably at least 2 cm, even more preferably at least 2.5 cm, most preferably at least 3 cm. This minimum height is necessary to ensure that the root system can be held back. In another preferred form, the height is a maximum of 10 cm, preferably a maximum of 9 cm, more preferably a maximum of 8 cm, even more preferably a maximum of 7 cm, most preferably a maximum of 6 cm. This height is maximal because a higher edge can hinder placing the trees on the conveyor belt, whereby the root system can be bumped and damaged when placing and removing the trees on the conveyor belt. Moreover, a higher edge will make many contact points with the root system if the root system slides against the edge. This then increases the chance of damage. In another preferred form the height is between 1 and 10 cm, preferably between 1.5 and 9 cm, more preferably between 2 and 8 cm, even more preferably between 2.5 and 7 cm, even more preferably between 3 and 6 cm.

In an embodiment, the mobile frame is provided with a platform on which operators can stand, for example to carry out sorting. In a preferred form the mobile frame, and also the platform, is at least 6.5 meters long, preferably at least 6.6 meters long, more preferably at least 6.7 meters long, even more preferably at least 6.8 meters long, even more preferably at least 6.9 meters long, even more preferably at least 7.0 meters long, and most preferably about 7.1 meters long. This length is the minimum required to place sufficient operators on the platform. Moreover, there is more space and therefore more time for sorting. This will allow the operator inspecting the trees to perform a more correct inspection. In another preferred form, the mobile frame is a maximum of 8 meters long, preferably a maximum of 7.5 meters long, even more preferably a maximum of 7.4 meters long, even more preferably a maximum of 7.3 meters long, even more preferably maximum 7.2 meters long, and most preferably approximately maximum 7.1 meters long. A longer mobile frame than this reduces the efficiency of grubbing up as the mobile frame becomes heavier and therefore more difficult to pull. In addition, a longer mobile frame makes the mobile frame less maneuverable. In another preferred form the mobile frame is between 6.5 and 8 meters long, preferably between 6.7 and 7.5 meters long, more preferably between 6.8 and 7.4 meters long, even more preferably between 6.9 and 7.3 meters long, even more preferably between 7.0 and 7.2 meters long, and most preferably about 7.1 meters long.

In an embodiment, the trees are manually received from the clamping belts and applied to the conveyor belt, by one or more operators present on the mobile frame. This is preferably done by one operator present on the mobile frame, standing on the platform of the mobile frame.

In an embodiment, sorting on the conveyor belt is done manually, by one or more operators present on a platform on the mobile frame. Preferably one operator. Preferably, installing the conveyor belts and sorting are not done by the same operator.

In a preferred form, the trees are nursery trees, such as fruit trees. The term "nursery trees" refers to trees that are grown for transplanting to be used as stock for germination and grafting, or for sale. The nursery trees are preferably fruit trees, more preferably fruit trees selected from the list of: apricot trees, almond trees, apple trees, pomegranate trees, persimmon trees, cherry trees, quince trees, medlar trees, Nashi pear trees, nectarine trees, pear trees, peach trees, plum trees, sweet chestnut trees, or walnut trees, preferably fruit trees selected from the list of: apple trees or pear trees. Examples of apple trees are Akero, Alkmene Cevaal, Amorosa, Aroma Ylvisaker, Asfari, Belgica^{®}, Bielaar Van Laar^{®}, Boskoop Quast^{®}, Braeburn Hillwell^{®}Hidala, C.G. 10 Yellow Delicious Smoothee^{®}, Civni^{®} Rubens^{®}, Civnired(S) Rubens^{®}, Collina, Cox La Vera^{®}, Delcorf Appache^{®}, Devil Gala^{®}, Discovery, Early Queen Finesse^{®}, Elise, Elstar Boerekamp(S) Excellent-Star^{®}, Elstar Bougie^{®}, Elstar Elshof^{®}, Elstar Palm P.C.P.^{®}, Empire, Erovan Early Red One^{®}, Frida, Fuji Fubrax(S) KIKU^{®}, Gala Big Buks, Gala Decarli Fendeca(S), Gala Galinette(cov), Gala Magma^{®}, Gala SchniCo(S) Red Schniga^{®}, Gala Schnitzer SchniCo(S) Schniga^{®}, Gala Venus Fengal(S), Geneva Early, Gloster 69, Golden Delicious Klon B "LB"^{®}, Golden Delicious Reinders^{®}, Golden Parsi(S) da Rosa^{®}, Gradisca, Granny Smith, Idared, Idared Red, Ina Cox(S) Holsteiner Ehlers, Ingrid Marie, Ingrid Marie "Karin Schneider", Ingrid Marie Red, Jonagold Boerekamp Early Queen^{®}, Jonagold Novajo^{®}, July Red, Katja, Kizuri(S) Morgana^{®}, Lobo, Makali, Mariri Red Aporo^{®}, Mored Joly red^{®}, Morren's Jonagored Supra^{®}, Nicogreen Greenstar^{®}, Nicoter Kanzi^{®}, Pinova(S), Rajka, Red Gravenstein Lyngby, Red Jonaprince Wilton's^{®}, Red Topaz, RNA 9842 Red Flame^{®}, Roat(S) King Red Delicious^{®}, Rode Boskoop Loop, RoHo 3615(S), Rubin, Rubinola, Summerred, Sunrise, Szampion Reno 2, Topaz, Wilton's Star Red Jonaprince Select^{®}, Zari, Zonga. Examples of pear trees are Abate Fetel, Beurré Alexander Lucas, Beurré Bosc, Beurré Hardy, Bon Chrétien Williams, Celina(pvr) Qtee^{®}, Cepuna(cov) Migo^{®}, Clapp's Favourite, Clara Frijs, Concorde^{®}, Condo, Conference M202, Doyenné de Comice, Durondeau, Sweet Sensation^{®}, and Thimo (Queen's Forelle^{®}).

According to a preferred form, the trees are sorted into two or more classes based on the number of branches present on the trees. Preferably, the trees are divided into three classes, a first class comprising trees with more than 7 branches, a second class comprising trees with between 5 and 7 branches, and a third class comprising trees with fewer than 5 branches.

The invention is advantageous because it allows efficient sorting into multiple classes. This minimizes the number of trees that are sorted into the wrong classes. This also minimizes the number of trees that are later sold at the wrong price.

The grubbed up trees are transferred to a cooling installation. In the cooling installation, the trees are kept under optimal conditions (temperature, relative humidity, etc.), which allows trees to be delivered to the customer from November to June. Before delivery, the trees are treated preventively against fungal diseases and infections.

In a second aspect, the invention concerns a grubbing device for grubbing up and sorting a plurality of successively planted trees.

Grubbing device for grubbing up and sorting a plurality of successively planted trees, comprising a tractor and a mobile frame coupled in line with the tractor, comprising:
- grubbing means, such as a root-ball knife, provided at the front of the frame along the side of the tractor, for loosening trees from a soil;
- guide means, provided at the front of the frame, positioned above the grubbing means, for guiding the grubbed up trees;
- clamping belts, positioned upwards along the side of the tractor and downstream of the guide means for clamping and carrying the grubbed up trees upwards;
- a conveyor belt, arranged horizontally on the mobile frame for transporting the trees away from the clamping belts, wherein the clamping belts open into the conveyor belt;
- a sorting belt, positioned upright over at least part of the length of the conveyor belt at an angle between 90° and 150° with respect to the conveyor belt.

The term "root-ball knife" refers to a device for cutting under and around the root system of a tree in the soil of the field, so that the trees are loosened from the soil with most of the root system intact. Preferably the grubbing means is a root-ball knife, more preferably a U-shaped root-ball knife, so that the knife can cut well under and around the root system.

In an embodiment, the device is also provided with a shaking device in line (downstream) of the grubbing means, for shaking loose excess soil in the root system.

One of ordinary skill in the art will appreciate that the grubbing device according to the second aspect is configured to perform at least some of the steps of the method according to the first aspect. The foregoing description and the following example may therefore relate to either of these two aspects.

### EXAMPLE

A plurality of nursery trees, namely apple trees, are planted as grafts in a field. The field is prepared so that the soil structure is optimal for planting young grafts. When the soil temperature is sufficiently high, the grafts are planted by a planting machine. The trees are placed in a trench at regular intervals and in a straight line. The planting machine with built-in rotary cultivator grinds the soil with which the tree is pressed down very finely. As a result, the roots quickly work their way into the soil, resulting in a strong root system and visibly better above-ground tree quality. The soil is pressed down and lightly raised against the rootstock. The ground is leveled in the rows.

As soon as the trees have lost all leaves, the grubbing up process starts. This is possible from November (February at the latest). A mobile frame, provided at the front with a guide means, a grubbing means and upwardly positioned clamping belts in line with the guide means, is coupled at the front to the rear of a tractor. In this way the guide means, the grubbing means and the clamping belts are located next to the tractor.

The tractor drives along the row of trees so that the trees are aligned with the guide means and the grubbing means. The guide means, positioned above the grubbing means, is provided with two arms, which are slightly tilted relative to each other. The guide means guides the trees between the two arms towards the clamping belts while the tractor is driving forward. The trees thus enter the arms at the widest distance between the two arms. Simultaneously, the trees are grubbed up by a U-shaped grubbing means that cuts into the soil of the field under and around the root system, so that the trees are loosened from the soil.

The grubbed up trees are then clamped between the clamping belts, which end in a horizontally arranged conveyor belt on the mobile frame. The trees are fed diagonally upwards along the side of the tractor towards the horizontally positioned conveyor belt. At the end of the clamping belts, at the level of the horizontal conveyor belt, the trees fed upwards are accepted by a first operator and placed with the root system on the conveyor belt. The trunk and/or crown of the trees leans against a sorting belt.

The sorting belt is positioned upright over part of the length of the conveyor belt at an angle of 120° relative to the conveyor belt. This causes the tree to tilt. The conveyor belt and the sorting belt move at the same transport speed, so that the tree does not become crooked or fall over.

While transporting the tree, the tree is inspected by a second operator. The root system is checked for root galls and damage and, if the root system is approved, the tree is sorted into classes based on the number of branches present on the tree.

The trees are sorted into three classes, a first class comprising trees with more than 7 branches, a second class comprising trees with between 5 and 7 branches, and a third class comprising trees with fewer than 5 branches.

The second operator passes the trees of the first class to a third operator who collects the trees of the first class and then throws a bundle of trees from the mobile frame onto the field. The trees are tied together in bundles in a net and labeled.

The second operator passes the trees of the second class to a fourth operator who collects the trees of the second class and processes them on the mobile frame. The trees are tied together in bundles in a net and labeled.

The second operator collects the trees of the third class separately on the mobile frame.

The grubbed up trees are transferred to a cooling installation of 45,000 m³ (surface area of 6,000 m²). In the cooling installation, the trees are kept under optimal conditions (temperature, relative humidity, etc.), which allows trees to be delivered to the customer from November to June. Before delivery, the trees are treated preventively against fungal diseases and infections.

The present invention should not be construed as being limited to the embodiment described above and certain modifications or changes may be added to the example described without having to re-evaluate the appended claims. For example, the present invention has been described with reference to apple trees, but it should be understood that the invention can be applied to, for example, apple trees or pear trees.

## Claims

1. Method for grubbing up and sorting a plurality of trees planted successively in a soil, comprising the sequential steps of:
- supplying a mobile frame pulled by a tractor, comprising grubbing means at the front, with which the trees are loosened from the soil, and guide means, with which the trees are guided towards two clamping belts;
- clamping the grubbed up trees between the two clamping belts;
- feeding the trees upward by means of the two clamping belts along the side of the tractor, wherein the clamping belts end in a horizontally arranged conveyor belt on the mobile frame, along which the grubbed up trees are transported, where the root system of the trees is supported on the conveyor belt, and where the trunk and/or crown of the trees leans against a sorting belt, positioned upright over at least part of the length of the conveyor belt at an angle between 90° and 150° with respect to the conveyor belt, the conveyor belt and the sorting belt moving at an equal transport speed; and
- sorting the trees into two or more classes based on the number of branches present on the trees.

2. The method according to claim 1, **characterized in that** the angle is variably adjustable between 90° and 150°, preferably between 100° and 140°, more preferably between 110° and 130°.

3. The method according to claim 1 or 2, **characterized in that** the root system is shaken during the upward movement of the trees.

4. The method according to any of the preceding claims, **characterized in that** the sorting belt is provided with cleats between which the trees are positioned, and wherein the cleats are positioned perpendicular to the sorting belt.

5. The method according to claim 4, **characterized in that** the cleats are positioned in an orderly manner on the sorting belt, with a cleat positioned alternately at the top and bottom of the sorting belt.

6. The method according to claim 4 or 5, **characterized in that** the cleats have an L-shaped profile.

7. The method according to claim 4, 5 or 6, **characterized in that** the distance between two cleats is between 30 and 60 cm.

8. The method according to any of the preceding claims, **characterized in that** the conveyor belt is provided with a raised edge over its entire length on a side opposite to the position of the sorting belt.

9. The method according to claim 8, **characterized in that** the raised edge has a wavy relief.

10. The method according to claim 8 or 9, **characterized in that** the raised edge has a height between 1 and 10 cm.

11. The method according to any of the preceding claims, **characterized in that** the mobile frame is between 6.5 and 8 meters long.

12. The method according to any of the preceding claims, **characterized in that** the trees are nursery trees, such as fruit trees.

13. The method according to any of the preceding claims, wherein sorting on the conveyor belt is done manually, by one or more operators present on a platform on the mobile frame.

14. The method according to any of the preceding claims, **characterized in that** the sorting belt has a width between 10 and 50 cm, preferably between 15 and 45 cm, more preferably between 20 and 40 cm.

15. Grubbing device for grubbing up and sorting a plurality of successively planted trees, comprising a tractor and a mobile frame coupled in line with the tractor, comprising:
- grubbing means, such as a root-ball knife, provided at the front of the frame along the side of the tractor, for loosening trees from a soil;
- guide means, provided at the front of the frame, positioned above the grubbing means, for guiding grubbed up trees;
- clamping belts, positioned upwards along the side of the tractor and downstream of the guide means for clamping and carrying the grubbed up trees upwards,
- a conveyor belt, arranged horizontally on the mobile frame, wherein the clamping belts open into the conveyor belt, for transporting the trees away from the clamping belts,
- a sorting belt, positioned upright over at least part of the length of the conveyor belt at an angle between 90° and 150° with respect to the conveyor belt.
